# EUROPEAN PATENT APPLICATION

(11) **EP 4 835 718 A1**
(43) Date of publication of application: **04.11.2026**
(21) Application number: 26174297.7
(22) Date of filing: 23.04.2026
(51) Int. Cl.: G06F 21/75, G01R 31/317, H03K 19/003

(54) **GLITCH DETECTOR AND SEMICONDUCTOR DEVICE INCLUDING THE SAME**

(30) Priority: 24.04.2025 KR 20250054098
(71) Applicant: Samsung Electronics Co., Ltd., Suwon-si, Gyeonggi-do 16677 (KR)
(72) Inventor: NAM, Hyunseok, 16677 Suwon-si (KR); KIM, Kiyeol, 16677 Suwon-si (KR); KIM, Kihong, 16677 Suwon-si (KR); BAEK, Jongtae, 16677 Suwon-si (KR); OH, Jaekeun, 16677 Suwon-si (KR)
(74) Representative: Marks & Clerk LLP

(57) **Abstract**

A glitch detector includes a replica logic cell circuit including a first replica logic cell replicated from one of a plurality of logic cells included in a protection-targeted chip, a voltage isolation circuit configured to generate an auxiliary voltage decoupled from a variation of the first voltage supplied to the protection-targeted chip, and a detection circuit configured to generate, based on a first output signal from the first replica logic cell, a first detection signal indicating whether the glitch on the first voltage has been detected. The first replica logic cell is configured to receive the auxiliary voltage, receive the first voltage as an input, and output the first output signal.

## Description

### BACKGROUND

The inventive concept relates to a glitch detector for sensing a glitch attack, and a semiconductor device including the glitch detector.

Recently, as technology advances, various mobile devices including Internet of Things devices have been introduced. Mobile devices connected to a network may mutually exchange information requiring security (hereinafter referred to as security information) such as personal information. However, security information may be exposed or transformed by various attacks on software or hardware of a mobile device.

As an example of a direct attack on hardware, a glitch attack on a source voltage supplied to a device storing security information about a mobile device is a simple and strong attack method. A glitch attack on a source voltage is an attack method which artificially causes a very short and strong voltage variation for rapidly changing a source voltage of a semiconductor device (or a semiconductor chip) of a mobile device to interrupt normal operation of a semiconductor device or induce an error, and thus exposes the security vulnerability of a semiconductor device.

In the related art, glitch detectors which detect a glitch attack or a glitch include a comparator, which compares a predetermined reference voltage with a source voltage currently supplied to a semiconductor device, and when the source voltage is lower or higher than the predetermined reference voltage, generate, by using the comparator, a detection signal indicating that a glitch has occurred.

Furthermore, the comparator has to support fast operation speeds for detecting a glitch of pulse waveform having a duration, and the comparator which is an analog circuit designed by a front process has to use a high amount of current for a comparison operation. Therefore, in a case where a plurality of glitch detectors are needed for a semiconductor device, a low power design is difficult. A level of the reference voltage provided to the comparator is set regardless of a characteristic of a digital logic in semiconductor devices, and due to this, accuracy of detection may be reduced. Also, the comparator includes a slightly complicated analog circuit, and transistors of a large size are used to increase the accuracy of detection of the comparator, causing a problem in which a design area occupied by a glitch detector increases.

### SUMMARY

The inventive concept provides a glitch device which is implemented to be suitable for a characteristic of a digital logic of a semiconductor device, and thus, provides a high detection performance on a glitch attack, based on low power.

According to an embodiment, a glitch detector for detecting a glitch attack on a protection-targeted chip comprises a replica logic cell circuit including a first replica logic cell replicated from one of a plurality of logic cells included in the protection-targeted chip; a voltage isolation circuit configured to generate an auxiliary voltage decoupled from a variation of a first voltage supplied to the protection-targeted chip; and a detection circuit configured to generate, based on a first output signal from the first replica logic cell, a first detection signal indicating whether a glitch on the first voltage has been detected, wherein the first replica logic cell is configured to receive the auxiliary voltage from the voltage isolation circuit, receive the first voltage as an input, and output the first output signal.

According to an embodiment, a semiconductor device includes a first power pin configured to receive a first voltage, a protection-targeted chip configured to operate based on the first voltage, and a glitch detector for detecting a glitch on the first voltage. The glitch detector includes a replica logic cell circuit including a first replica logic cell replicated from one of a plurality of logic cells included in the protection-targeted chip, a voltage isolation circuit configured to generate an auxiliary voltage decoupled from a variation of the first voltage supplied to the protection-targeted chip, and a detection circuit configured to generate a first detection signal indicating whether the glitch on the first voltage has been detected, based on a first output signal from the first replica logic cell. The first replica logic cell is configured to receive the auxiliary voltage from the voltage isolation circuit, receive the first voltage as an input, and output the first output signal.

According to an embodiment, a semiconductor device includes a first power pin configured to receive a first voltage, a first protection-targeted chip configured to operate based on the first voltage, and a first glitch detector configured to output a first detection signal indicating whether a glitch on the first voltage has been detected. The first glitch detector includes a first replica logic cell replicated from one of a plurality of first logic cells included in the first protection-targeted chip. The first glitch detector is configured to generate the first detection signal, based on a first output signal from the first replica logic cell based on an input of the first voltage.

According to an embodiment, a semiconductor device includes a power pin configured to receive a first voltage, a protection-targeted chip configured to operate based on the first voltage, and a glitch detector configured to detect a glitch on the first voltage. The glitch detector includes a low pass filter configured to filter the first voltage received through a first node, and to output to the filtered voltage to a second node, a fast charging circuit configured to charge the second node with an auxiliary voltage, based the first voltage received through the first node, a replica logic cell configured to receive the auxiliary voltage from the second node, and to output a first output signal based on the first voltage input through the first node, and a detection circuit configured to generate a first detection signal indicating whether the glitch on the first voltage has been detected, based on the first output signal.

According to an embodiment, a method of designing a glitch detector includes testing a voltage glitch attack on a protection-targeted chip, checking a characteristic of the protection-targeted chip, based on a test result, setting a design parameter on the glitch detector, based on the checked characteristic, and designing a glitch detector including a replica logic cell replicated from one of a plurality of logic cells of the protection-targeted chip, based on the set design parameter.

At least some of the above and other features of the invention are set out in the claims.

### BRIEF DESCRIPTION OF THE DRAWINGS

Embodiments will be more clearly understood from the following detailed description taken in conjunction with the accompanying drawings in which:
FIG. 1 is a block diagram schematically illustrating a semiconductor device according to an embodiment;
FIG. 2 is a block diagram illustrating a glitch detector of FIG. 1 according to an embodiment;
FIG. 3 is a diagram for describing an example of a protection-targeted chip of FIG. 1 according to an embodiment;
FIG. 4A is a circuit diagram illustrating in detail a glitch detector according to an embodiment, and FIG. 4B is a signal waveform diagram for describing a detection operation of the glitch detector;
FIG. 5 is a circuit diagram illustrating in detail a glitch detector according to an embodiment;
FIG. 6 is a circuit diagram illustrating in detail a glitch detector according to an embodiment;
FIGS. 7A and 7B are circuit diagrams illustrating in detail a glitch detector including two replica logic cells, according to an embodiment;
FIG. 8 is a circuit diagram illustrating in detail a glitch detector outputting two detection signals, according to an embodiment;
FIG. 9 is a block diagram schematically illustrating a semiconductor device according to an embodiment;
FIGS. 10 and 11 are circuit diagrams illustrating a glitch detector of FIG. 9 according to an embodiment;
FIG. 12 is a circuit diagram illustrating a glitch detector detecting an up glitch on a first voltage, according to an embodiment;
FIG. 13 is a circuit diagram illustrating a glitch detector detecting an up glitch on a ground voltage, according to an embodiment;
FIG. 14 is a block diagram illustrating a semiconductor device according to an embodiment;
FIG. 15 is a flowchart for describing a design method for a glitch detector, according to an embodiment;
FIG. 16 is a diagram for describing a method of defining a glitch to be detected by a glitch detector through a characteristic of a protection-targeted chip checked in operation S110 of FIG. 15; and
FIG. 17 is a diagram for describing a design parameter of FIG. 15.

### DETAILED DESCRIPTION OF THE EMBODIMENTS

Hereinafter, embodiments will be described in detail with reference to the accompanying drawings.

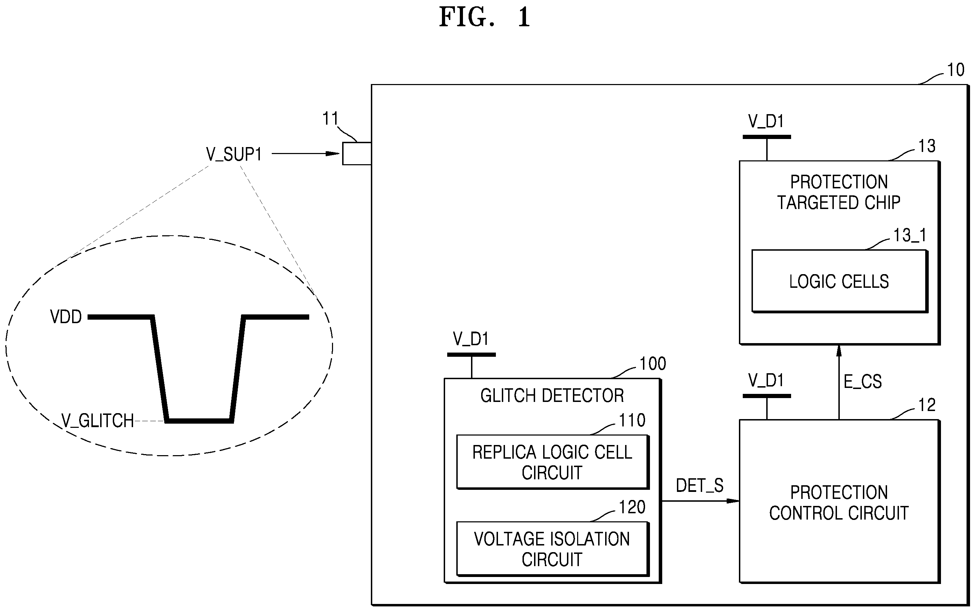

FIG. 1 is a block diagram schematically illustrating a semiconductor device 10 according to an embodiment.

Referring to FIG. 1, the semiconductor device 10 may be included in wearable devices or handheld devices such as mobile phones, smartphones, tablet personal computers (PCs), digital cameras, handheld game consoles, or e-books, which are electronic devices. The semiconductor device 10 may be referred to as a system on chip, a semiconductor chip, and a semiconductor integrated circuit.

In an embodiment, the semiconductor device 10 may include a glitch detector 100, a first power pin 11, a protection control circuit 12, and a protection-targeted chip 13.

The first power pin 11 may receive a first supply voltage V_SUP1 from the outside. The first supply voltage V_SUP1 may be a first source voltage which is provided for an operation of the semiconductor device 10. In this case, the first supply voltage V_SUP1 may be supplied to the glitch detector 100, the protection control circuit 12, and the protection-targeted chip 13 as the first source voltage to operate the semiconductor device 10. In an embodiment, the first source voltage for the operation of the semiconductor device 10 may be supplied from an element such as a power management integrated circuit or a voltage regulator of an electronic device including the semiconductor device 10. In this case, the power management integrated circuit or the voltage regulator may generate a first voltage V_D1 as the first source voltage based on the first supply voltage V_SUP1 and provide the first voltage V_D1 to the glitch detector 100, the protection control circuit 12, and the protection-targeted chip 13 to operate the semiconductor device 10.

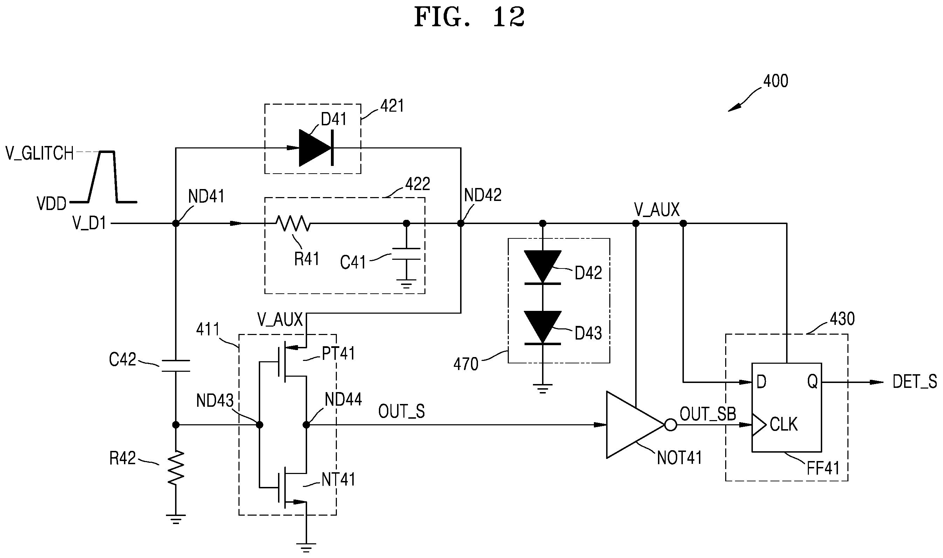

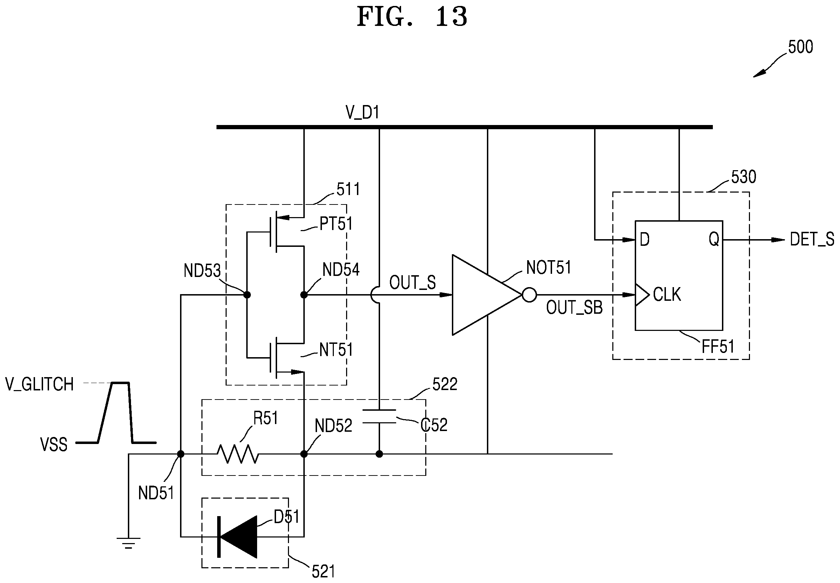

In FIG. 1, in a case where the first supply voltage V_SUP1 is rapidly lowered in level up to a glitch voltage level V_GLITCH by a glitch attack in the middle of maintaining a source voltage level VDD, the glitch detector 100 for detecting a corresponding glitch is illustrated, but this may be merely an embodiment and in a case where the first supply voltage V_SUP1 or a ground voltage VSS is rapidly raised in level up to a certain level by a glitch attack in the middle of maintaining the source voltage level VDD, the glitch detector 100 may be implemented to detect a corresponding glitch. Herein, a glitch attack (or a glitch) on the first supply voltage V_SUP1 may be described to be equal to a glitch attack (or a glitch) on the first voltage V_D1. Moreover, herein, it may be understood that the first voltage V_D1 includes a glitch denotes that a glitch attack occurs in the first voltage V_D1. Embodiments thereof will be described below with reference to FIGS. 12 and 13.

Although not explicitly described, the first supply voltage V_SUP1 may be rapidly decreased to a glitch voltage level V_GLITCH or increased to a certain level when the semiconductor device 10 operates in specific environments such as radio waves, radiation, or electromagnetic fields. In this case, such specific environments may collectively be referred to as glitch attacks.

The protection-targeted chip 13 may be a chip which is supplied with the first voltage V_D1 corresponding to the first supply voltage V_SUP1 and performs a certain operation. For example, the protection-targeted chip 13 may be a micro controller unit (MCU) or a secure chip. Furthermore, the protection-targeted chip 13 may be a central processing unit (CPU), a graphics processing unit (GPU), a neural network processing unit (NPU), or an image signal processor (ISP).

The protection-targeted chip 13 may include logic cells 13_1. For example, the protection-targeted chip 13 may include a digital circuit where is configured with the logic cells 13_1 connected to each other, and the logic cells 13_1 may include gate cells corresponding to at least one of a plurality of types of gate cells. The plurality of types of gate cells may include a NOT gate cell, a NAND gate cell, a NOR gate cell, an XOR gate cell, an XNOR gate cell, an AND gate cell, and an OR gate cell. In some embodiments, the logic cells 13_1 may be referred to as primitive cells which are fundamental logic cells used in a digital circuit design.

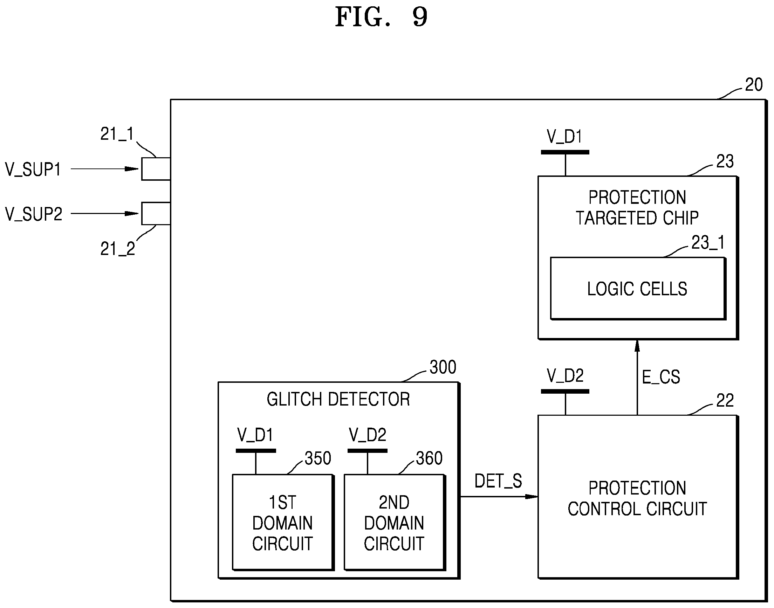

Herein, a level of the first voltage V_D1 may be equal to that of the first supply voltage V_SUP1, or may correspond to a level which is slightly lower than a level of the first supply voltage V_SUP1 due to a resistance component such as a power line connected between the first power pin 11 and each of the elements 12 and 13. Moreover, the first voltage V_D1 may be referred to as a first domain voltage, and the glitch detector 100, the protection control circuit 12, and the protection-targeted chip 13 may be defined as operating in the same voltage domain. In FIG. 1, it may be described that the glitch detector 100 operates in one voltage domain, but the inventive concept is not limited thereto. That is, the glitch detector 100 may operate in two voltage domains, based on a voltage domain of an element (for example, the protection control circuit 12) of the semiconductor device 10, and a detailed embodiment thereof will be described below with reference to FIG. 9.

In an embodiment, the glitch detector 100 may include a replica logic cell circuit 110 and a voltage isolation circuit 120. The replica logic cell circuit 110 may include at least one replica logic cell which is replicated from at least one of the logic cells 13_1 of the protection-targeted chip 13. The glitch detector 100 may detect whether there is a glitch on the first voltage V_D1, based on the replica logic cell circuit 110. A glitch detection operation of the glitch detector 100 may preemptively detect a glitch attack on the protection-targeted chip 13 to defend the glitch attack and has to accurately detect a glitch causing an abnormal operation of the protection-targeted chip 13, and a corresponding glitch may be associated with a characteristic of the protection-targeted chip 13. A characteristic of the protection-targeted chip 13 may be associated with a configuration of each of the logic cells 13_1, and the glitch detector 100 may actively use the replica logic cell circuit 110 for glitch detection, and thus, may accurately detect a glitch based on the characteristic of the protection-targeted chip 13.

In an embodiment, a logic cell of a certain type having an association of a threshold or more with the characteristic of the protection-targeted chip 13 among the logic cells 13_1 of the protection-targeted chip 13 may be a representative logic cell and may be designed to be selectively replicated and included in the replica logic cell circuit 110.

In an embodiment, the replica logic cell circuit 110 may receive the first voltage V_D1 to output a first output voltage, and the first output voltage may be used in glitch detection. For example, the replica logic cell circuit 110 may be configured so that the first output voltage is maintained at a certain level in the other period except a period where the first voltage V_D1 is rapidly changed to a glitch voltage level V_GLITCH at the source voltage level VDD, so as to operate with low power.

In an embodiment, the voltage isolation circuit 120 may generate an auxiliary voltage decoupled from a variation of the first voltage V_D1. For example, the auxiliary voltage may be a voltage which is formed through charging from the first voltage V_D1, and the voltage isolation circuit 120 may be implemented so that a level variation of the auxiliary voltage is minimized despite a rapid variation of the first voltage V_D1 (for example, drop up to the glitch voltage level V_GLITCH).

In an embodiment, the auxiliary voltage generated by the voltage isolation circuit 120 may be supplied to the replica logic cell circuit 110, and the replica logic cell circuit 110 may operate with the supplied auxiliary voltage.

In an embodiment, the glitch detector 100 may generate a first detection signal DET_S indicating whether a glitch on the first voltage V_D1 has been detected, based on the first output signal of the replica logic cell circuit 110, and may output the first detection signal DET_S to the protection control circuit 12.

In an embodiment, the protection control circuit 12 may be supplied with the first voltage V_D1 to operate with the first voltage V_D1 and may be implemented to stably operate even when the first voltage V_D1 includes a glitch. The protection control circuit 12 may generate an emergency control signal E_CS for emergency control on the protection-targeted chip 13, based on the first detection signal DET_S, and may output the emergency control signal E_CS to the protection-targeted chip 13. For example, the protection control circuit 12 may generate the emergency control signal E_CS for performing at least one of reset on the protection-targeted chip 13, security module execution on the protection-targeted chip 13, and the supply cutoff of the first voltage V_D1 on the protection-targeted chip 13, based on that the first detection signal DET_S indicates that a glitch on the first voltage V_D1 has been detected.

In some embodiments, the protection control circuit 12 may be implemented with software, hardware, or a combination of hardware and software, or may be implemented to be disposed in the protection-targeted chip 13.

In FIG. 1, it is illustrated that the first detection signal DET_S is output to the protection control circuit 12, but this may be merely an embodiment and the first detection signal DET_S may be output to the outside through an output pin (or a state pin) of the semiconductor device 10. For example, the outside may be an upper device which manages or controls the semiconductor device 10 and may monitor a state of the semiconductor device 10 or may control a security operation on the semiconductor device 10, based on the first detection signal DET_S output through the output pin of the semiconductor device 10.

In an embodiment, based on the emergency control signal E_CS, the protection-targeted chip 13 may call a software security routine, or may forcibly reset a system, or may delete a log record or an encryption key which is security information, or may enter a power cutoff mode or a sleep mode to prevent a glitch attack on the first voltage V_D1. However, this may be merely an embodiment, and the protection-targeted chip 13 is not limited thereto and may perform various defense operations in response to the emergency control signal E_CS.

The glitch detector 100 according to an embodiment may detect a glitch on the first voltage V_D1 by using the replica logic cell circuit 110 replicated from the logic cells 13_1 of the protection-targeted chip 13, and thus, may accurately detect a glitch causing an abnormal operation of the protection-targeted chip 13.

The glitch detector 100 according to an embodiment may use the replica logic cell circuit 110 operating with low power in glitch detection on the first voltage V_D1, and thus, may minimize power consumed in detection.

Moreover, the glitch detector 100 according to an embodiment may use the replica logic cell circuit 110, which is a digital circuit occupying a small design area, in glitch detection on the first voltage V_D1 instead of the comparator corresponding to an analog circuit occupying a large design area, and thus, may contribute to implement the semiconductor device 10 which is light, thin, short, and small.

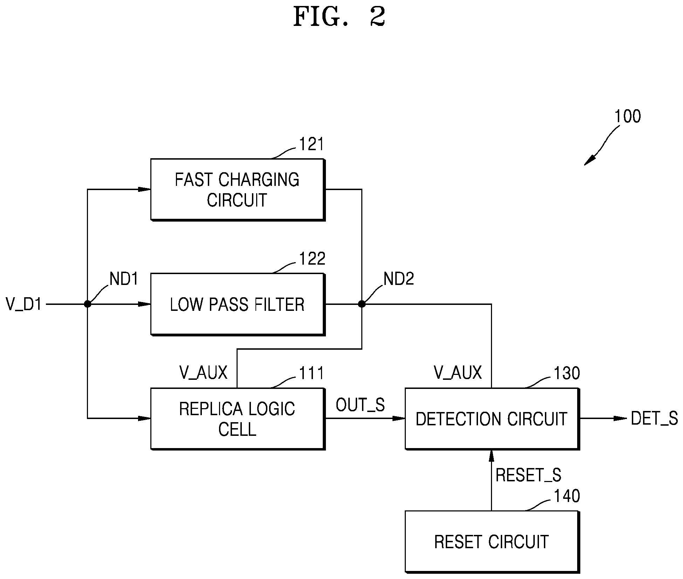

FIG. 2 is a block diagram illustrating the glitch detector 100 of FIG. 1 according to an embodiment. In FIG. 2, an embodiment is illustrated where a replica logic cell circuit (110 of FIG. 1) is implemented to include a replica logic cell 111, and a voltage isolation circuit (120 of FIG. 1) is implemented to include a fast charging circuit 121 and a low pass filter 122. However, FIG. 2 may be merely an embodiment for effectively describing the inventive concept, and embodiments may be sufficiently understood not to be limited thereto.

Referring to FIG. 2, the glitch detector 100 may include the replica logic cell 111, the fast charging circuit 121, the low pass filter 122, a detection circuit 130, and a reset circuit 140.

In an embodiment, the fast charging circuit 121 and the low pass filter 122 may be connected to each other in parallel between a first node ND1 and a second node ND2. For example, the fast charging circuit 121 may form a unidirectional current path (or a unidirectional charging path) from the first node ND1 to the second node ND2 so that a voltage of the second node ND2 is charged with an auxiliary voltage V_AUX by a first voltage V_D1 applied to the first node ND1.

In an embodiment, the low pass filter 122 may include a resistor and a capacitor and may perform a filtering operation based on a time constant determined by a resistance of the resistor and a capacitance of the capacitor. For example, a time constant may be determined so that the low pass filter 122 tracks a variation within a normal range of the first voltage V_D1.

In an embodiment, the second node ND2 may be quickly charged by the fast charging circuit 121 so that the auxiliary voltage V_AUX has a level approximate to a level of the first voltage V_D1, and the second node ND2 may be slowly charged by the low pass filter 122 so that the auxiliary voltage V_AUX has a level which is more approximate to a level of the first voltage V_D1.

Moreover, the auxiliary voltage V_AUX may be small (e.g. less) affected in rapid variation of the first voltage V_D1 by using the fast charging circuit 121 which forms a current path (this may denote that a current path in a reverse direction is cut off) in only one direction (a direction from the first node ND1 to the second node ND2), and thus, a level of the auxiliary voltage V_AUX may be stably maintained within a certain range. For example, the auxiliary voltage V_AUX may have a characteristic decoupled from a variation of the first voltage V_D1.

In an embodiment, the replica logic cell 111 may receive, through the second node ND2, the auxiliary voltage V_AUX which is stabler than the first voltage V_D1 and may operate. The replica logic cell 111 may receive the first voltage V_D1 through the first node ND1 to output a first output signal OUT_S to the detection circuit 130. For example, the replica logic cell 111 may receive a stable first voltage V_D1 to output the first output signal OUT_S which maintains a certain level (for example, a low level). The replica logic cell 111 may receive the first voltage V_D1 including a glitch to output the first output signal OUT_S which is changed from a certain level (for example, a low level or a logic low level) to another level (for example, a high level or a logic high level). Herein, the term "change" may be described as "transition" or "shift".

In an embodiment, the detection circuit 130 may receive, through the second node ND2, the auxiliary voltage V_AUX which is stabler than the first voltage V_D1 and may operate. The detection circuit 130 may generate a first detection signal DET_S indicating whether a glitch on the first voltage V_D1 has been detected, based on the first output signal OUT_S. For example, the detection circuit 130 may generate the first detection signal DET_S indicating that a glitch on the first voltage V_D1 has been detected, based on that a level of the first output signal OUT_S is shifted from a certain level to another level. For example, it may be set that the first detection signal DET_S having a low level which is an initial level indicates that a glitch on the first voltage V_D1 is not detected, and the first detection signal DET_S having a high level indicates that a glitch on the first voltage V_D1 has been detected.

In an embodiment, the reset circuit 140 may generate a reset signal RESET_S and output the reset signal RESET_S to the detection circuit 130. The detection circuit 130 may reset the first detection signal DET_S to have an initial level, based on the reset signal RESET_S. In some embodiments, the reset circuit 140 may be omitted in the glitch detector 100, and in this case, the detection circuit 130 may directly receive the reset signal RESET_S from the outside (for example, the protection control circuit 12 of FIG. 1).

Furthermore, at least one of a time constant of the low pass filter 122 and the number and type of replica logic cells 111 may be determined based on a characteristic of a protection-targeted chip (13 of FIG. 1).

The glitch detector 100 according to an embodiment may generate a stable auxiliary voltage V_AUX decoupled from a variation of the first voltage V_D1 through the fast charging circuit 121 and the low pass filter 122 to supply the auxiliary voltage V_AUX to the replica logic cell 111 and the detection circuit 130, and thus, the replica logic cell 111 and the detection circuit 130 may stably operate despite a glitch attack on the first voltage V_D1.

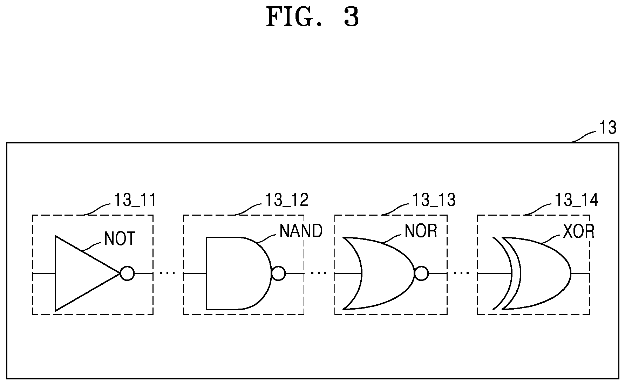

FIG. 3 is a diagram for describing an example of the protection-targeted chip 13 of FIG. 1 according to an embodiment.

Referring to FIG. 13, the protection-targeted chip 13 may include first to fourth logic cells 13_11 to 13_14. The protection-targeted chip 13 may be implemented to include various numbers and types of logic cells, based on a design method for the protection-targeted chip 13, the types of primitive cells supported by a tool used for a design of the protection-targeted chip 13, and an operation of the protection-targeted chip 13, and the first to fourth logic cells 13_11 to 13_14 illustrated in FIG. 13 may be some of all logic cells.

In an embodiment, the first logic cell 13_11 may be a NOT gate cell NOT (or an inverter), the second logic cell 13_12 may be a NAND gate cell NAND, the third logic cell 13_13 may be a NOR gate cell NOR, and the fourth logic cell 13_14 may include an XOR gate cell XOR. The first to fourth logic cells 13_11 to 13_14 may be implemented to include a plurality of transistors connected to each other, based on the type thereof. In an embodiment, the protection-targeted chip 13 may further include logic cells corresponding to an AND gate cell and an OR gate cell.

In an embodiment, at least one replica logic cell replicated from at least one of the first to fourth logic cells 13_11 to 13_14 may be included in the replica logic cell circuit 110 of FIG. 1.

In an embodiment, at least one of the first to fourth logic cells 13_11 to 13_14 may be selected as a representative logic cell having a high association with a characteristic of the protection-targeted chip 13, and the selected logic cell may be replicated and may be included in the replica logic cell circuit 110 of FIG. 1. Moreover, an association between a characteristic of the protection-targeted chip 13 and the first to fourth logic cells 13_11 to 13_14 may be obtained through a glitch attack test on the protection-targeted chip 13. For example, a logic cell which is the most vulnerable may be detected when performing the glitch attack test on the protection-targeted chip 13, and a corresponding logic cell may be selected as a representative logic cell having a high association with a characteristic of the protection-targeted chip 13. However, this may be merely an embodiment, and the inventive concept is not limited thereto, and for example, a representative logic cell may be selected by various methods to effectively detect a glitch capable of causing an abnormal operation of a protection-targeted chip 13 side.

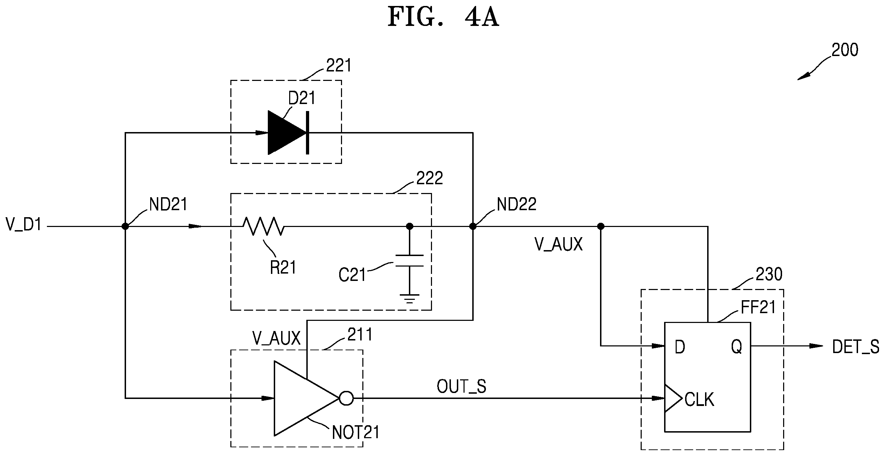

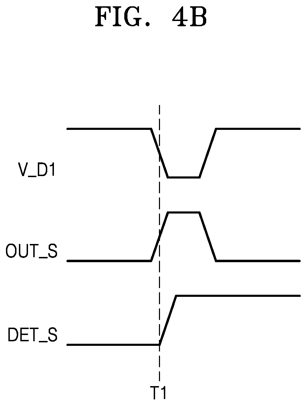

FIG. 4A is a circuit diagram illustrating in detail a glitch detector 200 according to an embodiment, and FIG. 4B is a signal waveform diagram for describing a detection operation of the glitch detector 200. For convenience of description, content overlapping FIG. 2 may be omitted in FIG. 4A.

Referring to FIG. 4A, the glitch detector 200 may include a replica logic cell 211, a fast charging circuit 221, a low pass filter 222, and a detection circuit 230.

In an embodiment, the replica logic cell 211 may include a NOT gate cell NOT21, the fast charging circuit 221 may include a diode D21, the low pass filter 222 may include a resistor R21 and a capacitor C21, and the detection circuit 230 may include a flip-flop FF21.

In an embodiment, the diode D21 may form a unidirectional current path from a first node ND21 to a second node ND22 so that the capacitor C21 connected to the second node ND22 is charged with an auxiliary voltage V_AUX by a first voltage V_D1 applied to the first node ND21. For example, the capacitor C21 may be quickly charged so that the auxiliary voltage V_AUX corresponds to a voltage obtained by subtracting a threshold voltage of the diode D21 from the first voltage V_D1, based on the diode D21.

In an embodiment, in the low pass filter 222, the capacitor C21 may be slowly charged based on a time constant determined based on a resistance of the resistor R21 and a capacitance of the capacitor C21, and thus, the auxiliary voltage V_AUX may be more approximate to the first voltage V_D1.

In an embodiment, a current path from the second node ND22 to the first node ND21 may be cut off by the diode D21 despite a rapid variation of the first voltage V_D1, and thus, a level of the auxiliary voltage V_AUX may be stably maintained within a certain range.

In an embodiment, the NOT gate cell NOT21 may be supplied with the auxiliary voltage V_AUX through the second node ND22 to operate. The NOT gate cell NOT21 may receive the first voltage V_D1 through the first node ND21 and may invert the first voltage V_D1 to output as a first output signal OUT_S to the detection circuit 130. For example, the NOT gate cell NOT21 may receive the first voltage V_D1 of a high level (or a source voltage level (VDD of FIG. 1)) and may invert the first voltage V_D1 of a high level to output as the first output signal OUT_S of a low level to the detection circuit 130. For example, the NOT gate cell NOT21 may receive the first voltage V_D1 of a low level (or a glitch voltage level V_GLITCH) and may invert the first voltage V_D1 of a low level to output as the first output signal OUT_S of a high level to the detection circuit 130.

In an embodiment, the flip-flop FF21 may be supplied with the auxiliary voltage V_AUX from the second node ND22 to operate. The flip-flop FF21 may receive the auxiliary voltage V_AUX through a data terminal D, may output a first detection signal DET_S through an output terminal Q, and may receive the first output signal OUT_S through a clock terminal CLK. The flip-flop FF21 may output the first detection signal DET_S changed (e.g. transitioned) to a high level based on the auxiliary voltage V_AUX of a high level, in response to the first output signal OUT_S changed from a low level to a high level in the middle of outputting the first detection signal DET_S of a low level which is initially set. For example, the flip-flop FF21 may output the first detection signal DET_S of a high level indicating that a glitch on the first voltage V_D1 has been detected, based on the first output signal OUT_S changed from a low level to a high level.

However, an implementation example of the glitch detector 200 illustrated in FIG. 4 may be merely an embodiment, and the inventive concept is not limited thereto, and for example, the glitch detector 200 may be variously implemented to enable an operation according to an embodiment to be performed.

Referring further to FIG. 4B, the NOT gate cell NOT21 may output the first output signal OUT_S changed from a low level to a high level in response to that the first voltage V_D1 is rapidly dropped and is lower than a threshold voltage of the NOT gate cell NOT21 at a 'T1' time. The flip-flop FF21 may output the first detection signal DET_S changed from a low level to a high level at the 'T1' time in response to the first output signal OUT_S changed from a low level to a high level. As described above, the first detection signal DET_S of a high level may indicate that a glitch on the first voltage V_D1 has been detected.

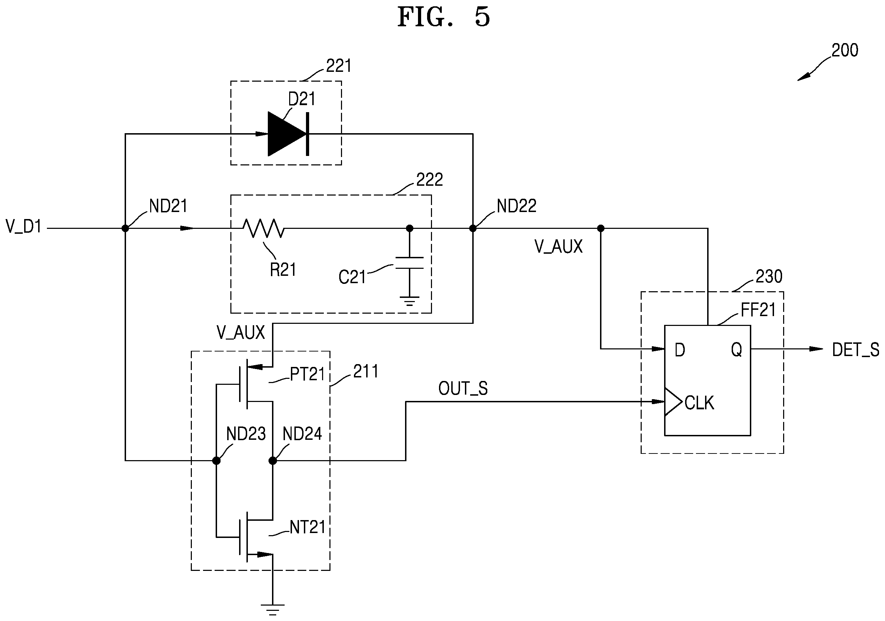

FIG. 5 is a circuit diagram illustrating in detail a glitch detector 200 according to an embodiment. For convenience of description, content overlapping FIGS. 2 and 4A may be omitted in FIG. 5.

Referring to FIG. 5, the glitch detector 200 may include a replica logic cell 211, a fast charging circuit 221, a low pass filter 222, and a detection circuit 230.

In an embodiment, the replica logic cell 211 may be a NOT gate cell and may include a first transistor PT21 and a second transistor NT21, the fast charging circuit 221 may include a diode D21, the low pass filter 222 may include a resistor R21 and a capacitor C21, and the detection circuit 230 may include a flip-flop FF21.

In an embodiment, the first transistor PT21 may be a p-channel metal-oxide-semiconductor (PMOS) transistor, and the second transistor NT21 may be an n-channel MOS (NMOS) transistor.

In an embodiment, a gate terminal of the first transistor PT21 may be connected to a gate terminal of the second transistor NT21 through a third node ND23, a drain terminal of the first transistor PT21 may be connected to a second node ND22, and a source terminal of the first transistor PT21 may be connected to a drain terminal of the second transistor NT21 through a fourth node ND24. Also, a source terminal of the second transistor NT21 may be grounded.

In an embodiment, a first voltage V_D1 may be input to the gate terminal of the first transistor PT21 and the gate terminal of the second transistor NT21 through the third node ND23, and a first output signal OUT_S may be output from the fourth node ND24.

In an embodiment, when the first voltage V_D1 is rapidly dropped from a high level and is lower than a threshold voltage of each of the first transistor PT21 and the second transistor NT21, a first output signal OUT_S changed from a low level to a high level may be output to the flip-flop FF21.

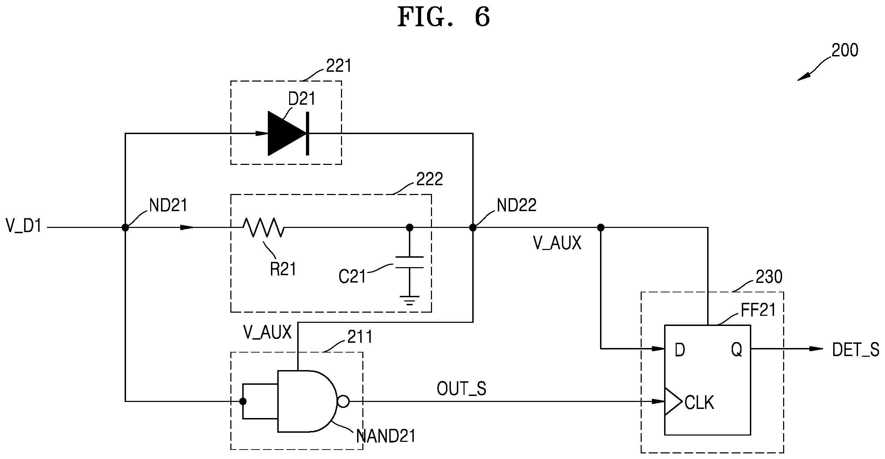

FIG. 6 is a circuit diagram illustrating in detail a glitch detector 200 according to an embodiment. For convenience of description, content overlapping FIG. 2 may be omitted in FIG. 6.

Referring to FIG. 6, the glitch detector 200 may include a replica logic cell 211, a fast charging circuit 221, a low pass filter 222, and a detection circuit 230.

In an embodiment the replica logic cell 211 may include a NAND gate cell NAND21, the fast charging circuit 221 may include a diode D21, the low pass filter 222 may include a resistor R21 and a capacitor C21, and the detection circuit 230 may include a flip-flop FF21.

In an embodiment, the NAND gate cell NAND21 may be supplied with an auxiliary voltage V_AUX through a second node ND22 to operate. The NAND gate cell NAND21 may receive a first voltage V_D1 from a first node ND21 through two input terminals to output as a first output signal OUT_S to the detection circuit 130. For example, the NAND gate cell NAND21 may receive the first voltage V_D1 of a high level (or a source voltage level (VDD of FIG. 1)) and may invert the first voltage V_D1 of a high level to output a first output signal OUT_S of a low level to the detection circuit 130. For example, the NAND gate cell NAND21 may receive the first voltage V_D1 of a low level (or a glitch voltage level V_GLITCH) to output the first output signal OUT_S of a high level based on an NAND operation to the detection circuit 130.

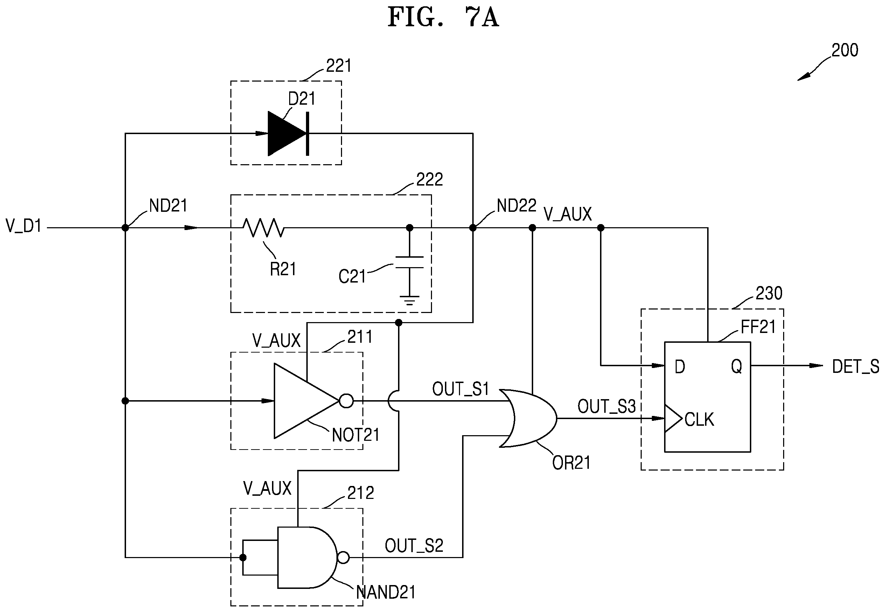

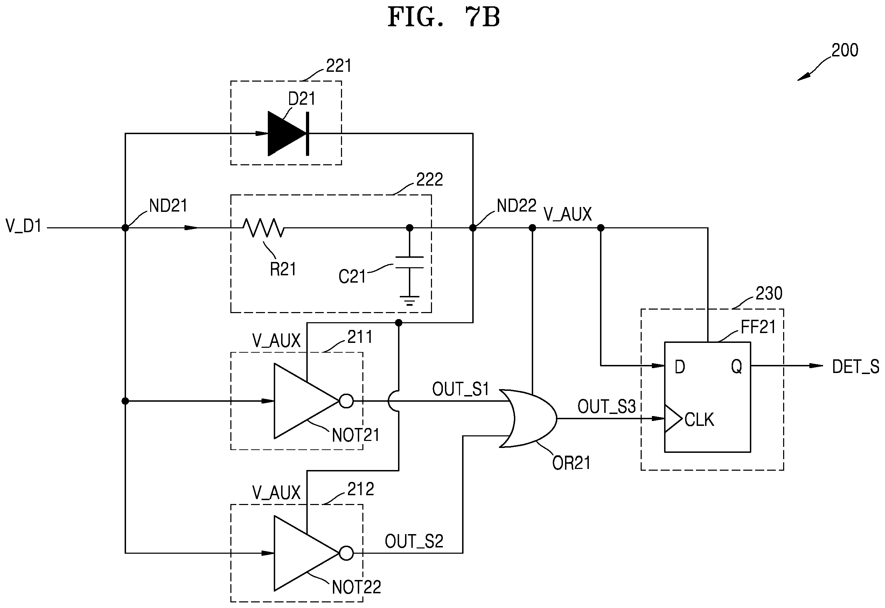

FIGS. 7A and 7B are circuit diagrams illustrating in detail a glitch detector 200 including two replica logic cells 211 and 212, according to an embodiment. For convenience of description, content overlapping FIGS. 2 and 4A may be omitted in FIGS. 7A and 7B.

Referring to FIG. 7A, the glitch detector 200 may include a first replica logic cell 211, a second replica logic cell 212, an OR gate cell OR21, a fast charging circuit 221, a low pass filter 222, and a detection circuit 230.

In an embodiment, the fast charging circuit 221 may include a diode D21, the low pass filter 222 may include a resistor R21 and a capacitor C21, and the detection circuit 230 may include a flip-flop FF21. In this case, the detection circuit 230 may include the OR gate cell OR21.

In an embodiment, the first replica logic cell 211 may include a first NOT gate cell NOT21, and the second replica logic cell 212 may include a NAND gate cell NAND21. For example, a type of first replica logic cell 211 may differ from a type of second replica logic cell 212.

In an embodiment, the first NOT gate cell NOT21 and the NAND gate cell NAND21 may be supplied with an auxiliary voltage V_AUX through a second node ND22 to operate. The first NOT gate cell NOT21 may receive a first voltage V_D1 and may invert the first voltage V_D1 to output as a first output signal OUT_S1 to the OR gate cell OR21. The NAND gate cell NAND21 may receive the first voltage V_D1 through two input terminals and may perform a NAND operation to output as a second output signal OUT_S2 to the OR gate cell OR21.

In an embodiment, the OR gate cell OR21 may be supplied with the auxiliary voltage V_AUX through the second node ND22 to operate. The OR gate cell OR21 may receive the first and second output signals OUT_S1 and OUT_S2 from the first NOT gate cell NOT21 and the NAND gate cell NAND21 and may perform an OR operation thereon, and thus, may output a third output signal OUT_S3 to the flip-flop FF21. In some embodiments, the OR gate cell OR21 may be replaced with various types of operation gate cells such as an AND gate cell.

Referring further to FIG. 7B, comparing with FIG. 7A, the second replica logic cell 212 may include a second NOT gate cell NOT22, and the OR gate cell OR21 may receive the first and second output signals OUT_S 1 and OUT_S2 from the first and second NOT gate cells NOT21 and NOT22 and may perform an OR operation thereon, and thus, may output the third output signal OUT_S3 to the flip-flop FF21.

However, FIGS. 7A and 7B may be merely an embodiment, and the inventive concept is not limited thereto, and for example, the glitch detector 200 may include more or more various replica logic cells. Also, in some embodiments, only some replica logic cells may be selected from among a plurality of replica logic cells of the glitch detector 200 and may be used in glitch detection on the first voltage V_D1.

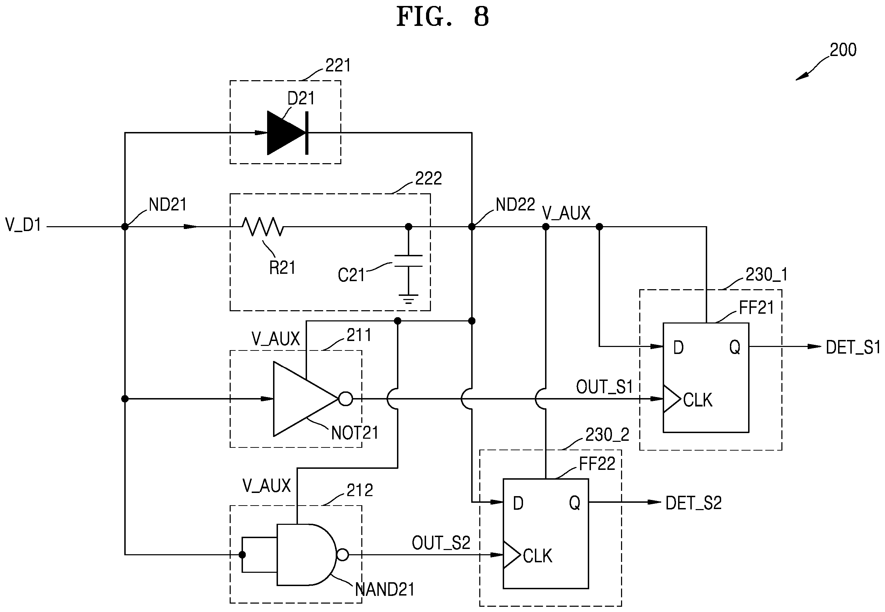

FIG. 8 is a circuit diagram illustrating in detail a glitch detector 200 outputting two detection signals DET_S1 and DET_S2, according to an embodiment. For convenience of description, content overlapping FIGS. 2, 4A, and 7A may be omitted in FIG. 8.

Referring to FIG. 8, the glitch detector 200 may include a first replica logic cell 211, a second replica logic cell 212, a fast charging circuit 221, a low pass filter 222, a first detection circuit 230_1, and a second detection circuit 230_2.

In an embodiment, the first replica logic cell 211 may include a first NOT gate cell NOT21, and the second replica logic cell 212 may include a NAND gate cell NAND21, the first detection circuit 230_1 may include a first flip-flop FF21 which is supplied with an auxiliary voltage V_AUX, and the second detection circuit 230_2 may include a second flip-flop FF22 which is supplied with the auxiliary voltage V AUX. The first flip-flop FF21 may receive a first output signal OUT_S1 from the first NOT gate cell NOT21 through a clock terminal, may receive the auxiliary voltage V_AUX through a data terminal, and may output a first detection signal DET_S1 through an output terminal of the first flip-flop FF21. The second flip-flop FF22 may receive a second output signal OUT_S2 from the NAND gate cell NAND21 through a clock terminal, may receive the auxiliary voltage V_AUX through a data terminal, and may output a second detection signal DET_S2 through an output terminal of the second flip-flop FF22.

In an embodiment, the first and second detection signals DET_S1 and DET_S2 may be output to a protection control circuit (12 of FIG. 1), or may be output to the outside through output pins of a semiconductor device (10 of FIG. 1). For example, the protection control circuit (12 of FIG. 1) may perform an arithmetic operation on the first and second detection signals DET_S1 and DET_S2, based on at least one of an OR operation and an AND operation, and thus, may generate an emergency control signal E_CS.

FIG. 9 is a block diagram schematically illustrating a semiconductor device 20 according to an embodiment. For convenience of description, content overlapping FIG. 1 may be omitted in FIG. 9.

Referring to FIG. 9, the semiconductor device 20 may include a first power pin 21_1, a second power pin 21_2, a glitch detector 300, a protection control circuit 22, and a protection-targeted chip 23. In an embodiment, the protection-targeted chip 23 may comprise logic cells 23_1.

The first power pin 21_1 may receive a first supply voltage V_SUP1 from the outside, and the second power pin 21_2 may receive a second supply voltage V_SUP2 from the outside. For example, a level of the first supply voltage V_SUP1 may differ from that of the second supply voltage V_SUP2. The first and second supply voltages V_SUP1 and V_SUP2 may be first and second source voltages supplied for an operation of the semiconductor device 20. In this case, the first supply voltage V_SUP1 may be supplied to the glitch detector 300 and the protection-targeted chip 23 as the first source voltage to operate thereof, and the second supply voltage V_SUP2 may be supplied to the glitch detector 300 and the protection control circuit 22 as the second source voltage to operate thereof. In an embodiment, the first and second source voltages for the operation of the semiconductor device 20 may be provided from an element such as a power management integrated circuit or a voltage regulator of an electronic device including the semiconductor device 20. In this case, the power management integrated circuit or the voltage regulator may generate a first voltage V_D1 as the first source voltage based on the first supply voltage V_SUP1 and provide the first voltage V_D1 to the glitch detector 300 and the protection-targeted chip 23 to operate the semiconductor device 20, and generate a second voltage V_D2 as the second source voltage based on the second supply voltage V_SUP2 and provide the second voltage V_D2 to the glitch detector 300 and the protection control circuit 22 to operate the semiconductor device 20.

The protection-targeted chip 23 may be supplied with a first voltage V_D1 corresponding to the first supply voltage V_SUP1 to perform a certain operation, and the protection control circuit 22 may be supplied with a second voltage V_D2 corresponding to the second supply voltage V_SUP2 to perform a certain operation.

Herein, a level of the second voltage V D2 may be equal to that of the second supply voltage V_SUP2, or may correspond to a level which is slightly lower than a level of the second supply voltage V_SUP2 due to a resistance component such as a power line connected between the second power pin 21_2 and the protection control circuit 22. Also, the second voltage V_D2 may be referred to as a second domain voltage, and it may be defined that the glitch detector 300 operates in first and second voltage domains, the protection-targeted chip 23 operates in the first voltage domain, and the protection control circuit 22 operates in the second voltage domain.

In an embodiment, the glitch detector 300 may include a first domain circuit 350 and a second domain circuit 360. The first domain circuit 350 may be supplied with the first voltage V_D1 to operate, and the second domain circuit 360 may be supplied with the second voltage V_D2 to operate. The first domain circuit 350 may be configured to detect a glitch on the first voltage V_D1, and the second domain circuit 360 may output, to the protection control circuit 22, a first detection signal DET_S having a magnitude appropriate for the protection control circuit 22 operating in the second voltage domain, based on an output signal of the first domain circuit 350. To this end, the semiconductor device 20 may further include a level adjustment circuit which performs a voltage domain conversion operation between the first domain circuit 350 and the second domain circuit 360.

In an embodiment, the protection control circuit 22 may generate the emergency control signal E_CS and output the emergency control signal E_CS to the protection-targeted chip 23, based on the first detection signal DET_S.

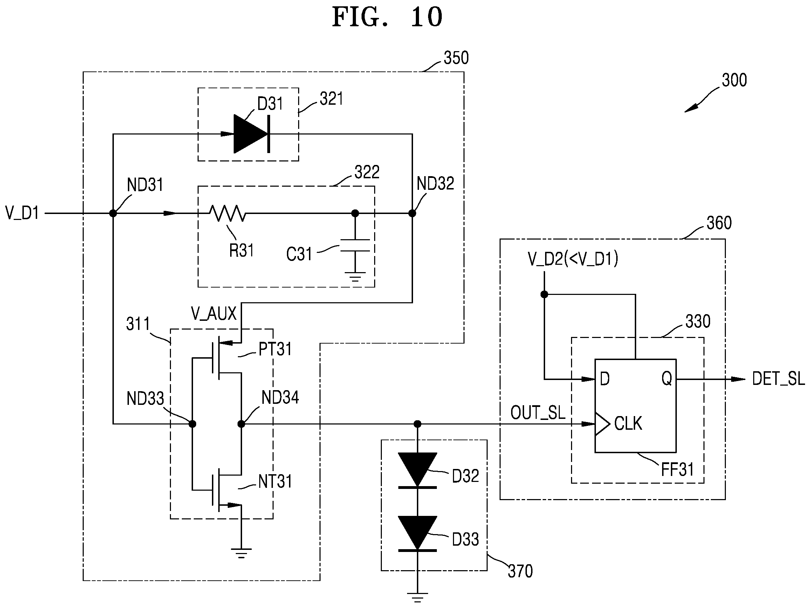

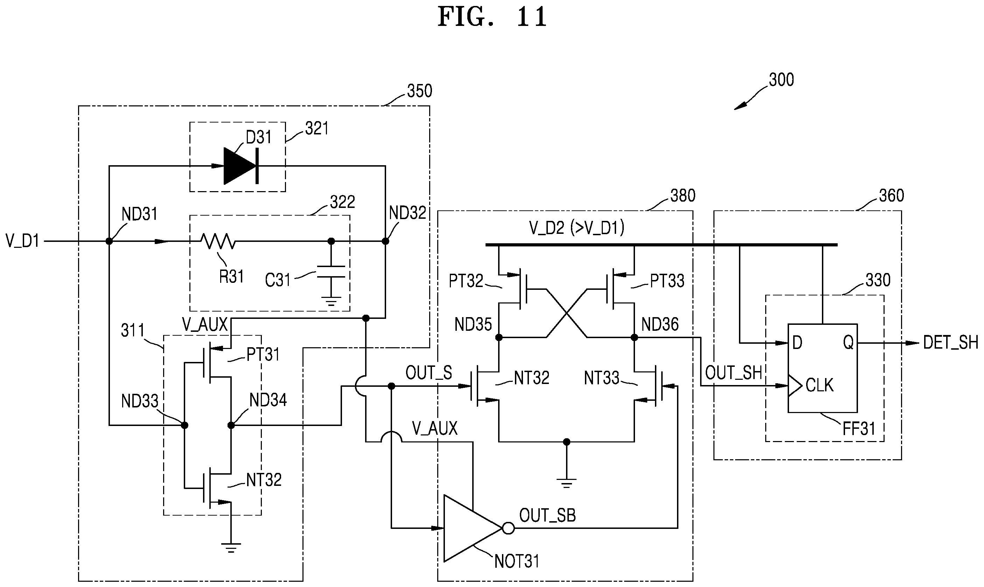

FIGS. 10 and 11 are circuit diagrams illustrating the glitch detector 300 of FIG. 9 according to an embodiment. For convenience of description, content overlapping FIGS. 2, 4A, and 5 may be omitted in FIGS. 10 and 11. In FIG. 10, a level of a second voltage V_D2 may be assumed to be lower than that of a first voltage V_D1, and in FIG. 11, a level of the second voltage V_D2 may be assumed to be higher than that of the first voltage V_D1.

Referring to FIG. 10, the glitch detector 300 may include a replica logic cell 311, a fast charging circuit 321, a low pass filter 322, a detection circuit 330, and a voltage limit circuit 370. The replica logic cell 311, the fast charging circuit 321, and the low pass filter 322 may be included in a first domain circuit 350, and the detection circuit 330 may be included in a second domain circuit 360. Herein, the voltage limit circuit 370 may be referred to as a level adjustment circuit.

In an embodiment, the fast charging circuit 321 may include a first diode D31, the low pass filter 322 may include a resistor R31 and a capacitor C31, the replica logic cell 311 may be a NOT gate cell and may include a first transistor PT31 and a second transistor NT31, and the detection circuit 330 may include a flip-flop FF31. Herein, the detection circuit 330 may include the voltage limit circuit 370. The fast charging circuit 321 and the low pass filter 322 may be connected in parallel between a first node ND31 and a second node ND32.

In an embodiment, the replica logic cell 311 may be supplied with an auxiliary voltage V_AUX to operate in a first voltage domain, and when a first voltage V_D1 input through a third node ND33 includes a glitch, the replica logic cell 311 may output, through a fourth node ND34, an output signal of a high level suitable for a level of the auxiliary voltage V_AUX.

In an embodiment, the voltage limit circuit 370 may be configured to down-shift a level of a first output signal, output from the replica logic cell 311, to a certain level (for example, a level of a second voltage V_D2 or a level approximate thereto) or less. For example, the voltage limit circuit 370 may include second and third diodes D32 and D33 so as to drop a voltage of the fourth node ND34 to lower a level of the first output signal. However, this may be merely an embodiment, and the inventive concept is not limited thereto, and for example, the voltage limit circuit 370 may include more or fewer than two diodes, based on a threshold voltage of a diode, or may be implemented based on various methods for lowering a level of the first output signal output from the replica logic cell 311.

In an embodiment, the flip-flop FF31 may receive, through a clock terminal CLK, a first output signal OUT_SL which is down-shifted to a certain level or less by the voltage limit circuit 370. For example, because the flip-flop FF31 operates in the second voltage domain corresponding to the second voltage V_D2, when the flip-flop FF31 directly receives the first output signal of the replica logic cell 311 operating in the first voltage domain corresponding to the first voltage V_D1 or the auxiliary voltage V_AUX, this may become a burden on internal transistors of the flip-flop FF31, and thus, such a burden may be removed by the voltage limit circuit 370. The flip-flop FF31 may output a first detection signal DET_SL, based on the first output signal OUT_SL.

Referring further to FIG. 11, the glitch detector 300 may include a replica logic cell 311, a fast charging circuit 321, a low pass filter 322, a detection circuit 330, and a voltage shift circuit 380. The replica logic cell 311, the fast charging circuit 321, and the low pass filter 322 may be included in a first domain circuit 350, and the detection circuit 330 may be included in a second domain circuit 360.

In an embodiment, the voltage shift circuit 380 may be configured to up-shift a level of a first output signal OUT_S, output from the replica logic cell 311, to a certain level (for example, a level of a second voltage V_D2 or a level approximate thereto) or more. For example, the voltage shift circuit 380 may include a second NOT gate cell NOT31 and third to sixth transistors PT32, NT32, PT33, and NT33. However, this may be merely an embodiment, and the inventive concept is not limited thereto, and for example, the voltage shift circuit 380 may be implemented based on various methods for increasing a level of the first output signal OUT_S output from the replica logic cell 311.

For example, the second NOT gate cell NOT31 may invert the first output signal OUT_S received from the replica logic cell 311 and output a first inversion output signal OUT_SB to a gate terminal of the sixth transistor NT33.

For example, the third transistor PT32 and the fifth transistor PT33 may each be a PMOS transistor, and the fourth transistor NT32 and the sixth transistor NT33 may each be an NMOS transistor. A gate terminal of the third transistor PT32 may be connected to a sixth node ND36, a source terminal of the third transistor PT32 may receive the second voltage V_D2, and a drain terminal of the third transistor PT32 may be connected to a drain terminal of the fourth transistor NT32 through a fifth node ND35. A gate terminal of the fourth transistor NT32 may receive the first output signal OUT_S output from the replica logic cell 311, and a source terminal of the fourth transistor NT32 may be grounded. A source terminal of the fifth transistor PT33 may receive the second voltage V_D2, a gate terminal of the fifth transistor PT33 may be connected to the fifth node ND35, and a drain terminal of the fifth transistor PT33 may be connected to a drain terminal of the sixth transistor NT33 through the sixth node ND36. A gate terminal of the sixth transistor NT33 may receive the first inversion output signal OUT_SB from the second NOT gate cell NOT31, and a source terminal of the sixth transistor NT33 may be grounded.

In an embodiment, the flip-flop FF31 may receive, through a clock terminal CLK, a first output signal OUT_SH which is up-shifted to a certain level or more by the voltage shift circuit 380. For example, because the flip-flop FF31 operates in the second voltage domain corresponding to the second voltage V_D2, when the flip-flop FF31 directly receives the first output signal of the replica logic cell 311 operating in the first voltage domain corresponding to the first voltage V_D1 or the auxiliary voltage V_AUX, a problem may occur where internal transistors of the flip-flop FF31 do not normally operate as a level of the first output signal is lower than the second voltage V_D2, and thus, a corresponding problem may be solved by the voltage shift circuit 380. The flip-flop FF31 may output a first detection signal DET_SH, based on the first output signal OUT_SH.

FIG. 12 is a circuit diagram illustrating a glitch detector 400 detecting an up glitch on a first voltage V_D1, according to an embodiment. In FIG. 12, it may be assumed that the first voltage V_D1 is rapidly up-shifted from a source voltage level VDD to a glitch voltage level V_GLITCH due to a glitch attack.

Referring to FIG. 12, the glitch detector 400 may include a replica logic cell 411, a fast charging circuit 421, a low pass filter 422, a detection circuit 430, a voltage limit circuit 470, a second resistor R42, a second capacitor C42, and a second NOT gate cell NOT41.

In an embodiment, the fast charging circuit 421 may include a first diode D41, the low pass filter 322 may include a first resistor R41 and a first capacitor C41, the replica logic cell 411 may be a first NOT gate cell.

In an embodiment, the first NOT gate cell of the replica logic cell 411 may include a first transistor PT41 and a second transistor NT41, and the detection circuit 430 may include a flip-flop FF41. The fast charging circuit 421 and the low pass filter 422 may be connected in parallel between a first node ND41 and a second node ND42. One end of the second capacitor C42 may be connected to the first node ND41, and the other end of the second capacitor C42 may be connected to a third node ND43. One end of the second resistor R42 may be connected to the third node ND43, and the other end of the second resistor R42 may be grounded.

In an embodiment, the first diode D41 may form a unidirectional current path from the first node ND41 to the second node ND42 so that the capacitor C41 connected to the second node ND42 is charged with an auxiliary voltage V_AUX by a first voltage V_D1 applied to the first node ND41.

In an embodiment, in the low pass filter 422, the capacitor C41 may be slowly charged based on a time constant determined based on a resistance of the first resistor R41 and a capacitance of the first capacitor C41, and thus, the auxiliary voltage V_AUX may be more approximate to the first voltage V_D1.

In an embodiment, when the first voltage V_D1 is rapidly shifted to a glitch voltage level V_GLITCH higher than the source voltage level VDD, the voltage limit circuit 470 may operate for preventing the auxiliary voltage V_AUX from being rapidly shifted in association with the first voltage V_D1. For example, the voltage limit circuit 470 may be configured so that a level of the auxiliary voltage V_AUX is maintained to be less than a certain level (for example, the source voltage level VDD of the first voltage V_D1). For example, the voltage limit circuit 470 may include second and third diodes D42 and D43 so as to drop a voltage of the second node ND42 to allow a level of the auxiliary voltage V_AUX to be maintained to be the source voltage level VDD or less, in response to that the auxiliary voltage V_AUX is rapidly shifted to the glitch voltage level V_GLITCH higher than the source voltage level VDD. However, this may be merely an embodiment, and the inventive concept is not limited thereto, and for example, the voltage limit circuit 470 may include more or fewer than two diodes, based on a threshold voltage of a diode, or may be implemented based on various methods for stably maintaining a level of the auxiliary voltage V_AUX. The stable auxiliary voltage V_AUX may be supplied to the replica logic cell 411, the second NOT gate cell NOT41, and the flip-flop FF41.

In an embodiment, when the first voltage V_D1 maintains the source voltage level VDD, the second capacitor C42 may cut off an input of the first voltage V_D1 to a third node ND43, and thus, an input of a low level may be supplied to the third node ND43. Therefore, the replica logic cell 411 may output a first output signal OUT_S of a high level to the second NOT gate cell NOT41 through a fourth node ND44, and the second NOT gate cell NOT41 may invert the first output signal OUT_S to output a first inversion output signal OUT_SB of a low level to the flip-flip FF41.

In an embodiment, when the first voltage V_D1 is rapidly shifted to the glitch voltage level V_GLITCH higher than the source voltage level VDD, the second capacitor C42 may form a current path so that the first voltage V_D1 to be input to the third node ND43, and thus, an input of a high level may be supplied to the third node ND43. Therefore, the replica logic cell 411 may output the first output signal OUT_S of a low level to the second NOT gate cell NOT41 through a fourth node ND44, and the second NOT gate cell NOT41 may invert the first output signal OUT_S to output the first inversion output signal OUT_SB of a high level to the flip-flip FF41. The flip-flop FF41 may output a first detection signal DET_S changed to a high level based on the auxiliary voltage V_AUX of a high level, in response to the first inversion output signal OUT_SB changed from a low level to a high level in the middle of outputting the first detection signal DET_S of a low level which is initially set. For example, the flip-flop FF41 may output the first detection signal DET_S of a high level indicating that a glitch on the first voltage V_D1 has been detected, based on the first inversion output signal OUT_SB changed from a low level to a high level.

However, a configuration of the glitch detector 400 of FIG. 12 may be merely an embodiment, and the inventive concept is not limited thereto, and for example, the glitch detector 400 may be variously implemented according to the inventive concept to effectively detect an up glitch on the first voltage V_D1.

FIG. 13 is a circuit diagram illustrating a glitch detector 500 detecting an up glitch on a ground voltage (VSS), according to an embodiment. In FIG. 13, it may be assumed that a ground voltage is rapidly up-shifted from a ground level VSS to a glitch voltage level V_GLITCH due to a glitch attack.

Referring to FIG. 13, the glitch detector 500 may include a replica logic cell 511, a fast charging circuit 521, a low pass filter 522, a detection circuit 530, and a second NOT gate cell NOT51.

In an embodiment, the fast charging circuit 521 may include a first diode D51, the low pass filter 522 may include a first resistor R51 and a first capacitor C52, the replica logic cell 511 may be a first NOT gate cell and may include a first transistor PT51 and a second transistor NT51, and the detection circuit 530 may include a flip-flop FF51. The fast charging circuit 521 and the low pass filter 522 may be connected in parallel between a first node ND51 and a second node ND52. Moreover, the replica logic cell 511, the second NOT gate cell NOT51, and the flip-flop FF51 may be supplied with a first voltage V_D1 to operate.

In an embodiment, a gate terminal of the first transistor PT51 may be connected to a gate terminal of the second transistor NT51 through the third node ND53, a source terminal of the first transistor PT51 may receive the first voltage V_D1, and a drain terminal of the first transistor PT51 may be connected to a drain terminal of the second transistor NT51 through a fourth node ND54. A source terminal of the second transistor NT51 may be connected to the second node ND52.

In an embodiment, the low pass filter 522 may be configured to track a variation within a normal range of a ground voltage. Based on a configuration of each of the low pass filter 522 and the first diode D51, a voltage of the second node ND52 may be decoupled from a variation of the ground voltage so that the replica logic cell 511 and the second NOT gate cell NOT51 are stably grounded even when the ground voltage is rapidly shifted to the glitch voltage level V_GLITCH higher than a ground level VSS.

In an embodiment, when the ground voltage maintains the ground level VSS, the replica gate cell 511 may output a first output signal OUT_S of a high level to the second NOT gate cell NOT51 through the fourth node ND54, and the second NOT gate cell NOT51 may invert the first output signal OUT_S and output a first inversion output signal OUT_SB of a low level to the flip-flop FF51.

In an embodiment, when the ground voltage is rapidly shifted to the glitch voltage level V_GLITCH higher than the ground level VSS, the replica gate cell 511 may output the first output signal OUT_S of a low level to the second NOT gate cell NOT51 through the fourth node ND54, and the second NOT gate cell NOT51 may invert the first output signal OUT_S and output the first inversion output signal OUT_SB of a high level to the flip-flop FF51. The flip-flop FF51 may output the first detection signal DET_S changed to a high level based on the first voltage V_D1 of a high level, in response to the first inversion output signal OUT_SB changed from a low level to a high level in the middle of outputting the first detection signal DET_S of a low level which is initially set. For example, the flip-flop FF51 may output the first detection signal DET_S of a high level indicating that a glitch on the ground voltage has been detected, based on the first inversion output signal OUT_SB changed from a low level to a high level.

However, a configuration of the glitch detector 500 of FIG. 13 may be merely an embodiment, and the inventive concept is not limited thereto, and for example, the glitch detector 500 may be variously implemented according to the inventive concept to effectively detect a glitch on the ground voltage.

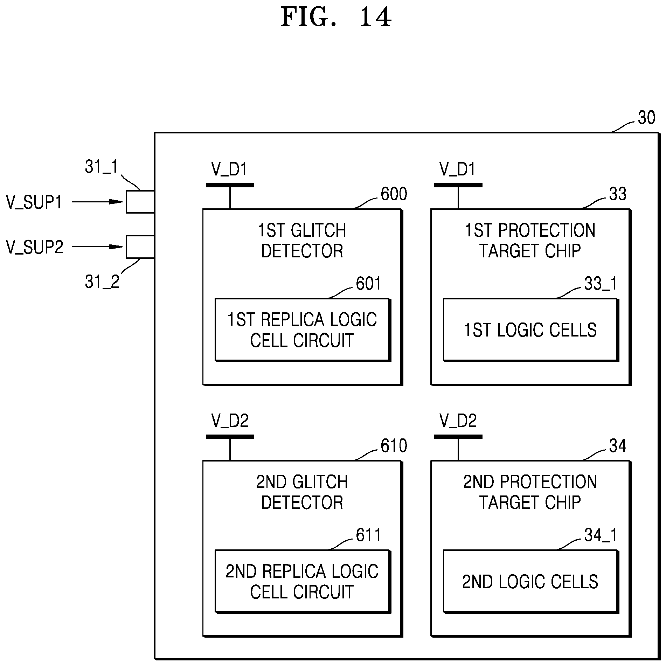

FIG. 14 is a block diagram illustrating a semiconductor device 30 according to an embodiment.

Referring to FIG. 14, the semiconductor device 30 may include a first glitch detector 600, a second glitch detector 610, a first power pin 31_1, a second power pin 31_2, a first protection-targeted chip 33, and a second protection-targeted chip 34.

The first power pin 31_1 may receive a first supply voltage V_SUP1 from the outside. The first supply voltage V_SUP1 may be a first source voltage which is provided for an operation of the first protection-targeted chip 33. The second power pin 31_2 may receive a second supply voltage V_SUP2 from the outside. The second supply voltage V_SUP2 may be a second source voltage which is provided for an operation of the second protection-targeted chip 34.

The first protection-targeted chip 33 may include first logic cells 33_1 and may be a chip which is supplied with a first voltage V_D1 corresponding to the first supply voltage V_SUP1 to perform a certain operation. The second protection-targeted chip 34 may include second logic cells 34_1 and may be a chip which is supplied with a second voltage V_D2 corresponding to the second supply voltage V_SUP2 to perform a certain operation.

In an embodiment, the first glitch detector 600 may detect a glitch of the first voltage V_D1 to prevent an abnormal operation of the first protection-targeted chip 33 caused by a glitch attack on the first voltage V_D1. To this end, the first glitch detector 600 may include a first replica logic cell circuit 601 replicated from first logic cells 33_1.

In an embodiment, the second glitch detector 610 may detect a glitch of the second voltage V_D2 to prevent an abnormal operation of the second protection-targeted chip 34 caused by a glitch attack on the second voltage V_D2. To this end, the second glitch detector 610 may include a second replica logic cell circuit 611 replicated from second logic cells 34_1.

In an embodiment, the first replica logic cell circuit 601 may be designed to be suitable for a characteristic of the first protection-targeted chip 33, and the second replica logic cell circuit 611 may be designed to be suitable for a characteristic of the second protection-targeted chip 34, and thus, the first replica logic cell circuit 601 may differ from the second replica logic cell circuit 611. For example, at least one of the number and type of replica logic cells included in the first replica logic cell circuit 601 may differ from the number and type of replica logic cells included in the second replica logic cell circuit 611.

However, the semiconductor device 33 of FIG. 14 may be merely an embodiment, and the inventive concept is not limited thereto, and for example, the semiconductor device 30 may be variously implemented to include more glitch detectors and more protection target circuits.

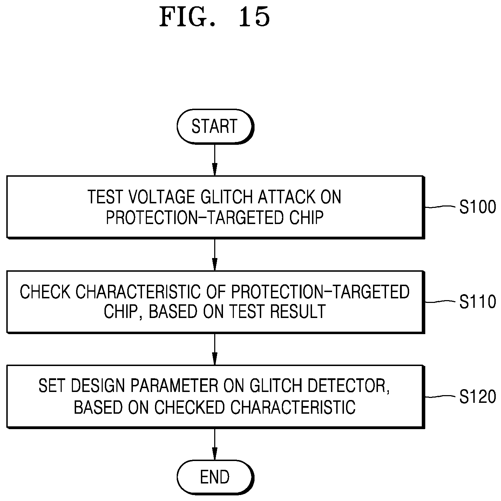

FIG. 15 is a flowchart diagram for describing a method of designing a glitch detector, according to an embodiment.

Referring to FIG. 15, in operation S100, a voltage glitch attack test on a protection-targeted chip may be performed.

In operation S110, a characteristic of the protection-targeted chip may be checked based on a test result. For example, the characteristic of the protection-targeted chip may include information about a glitch causing an abnormal operation and information associated with logic cells which cause an abnormal operation because of being vulnerable to a glitch attack.

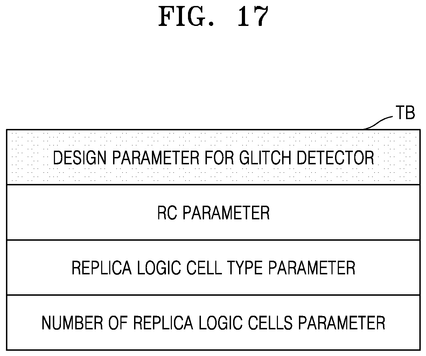

In operation S120, a design parameter on a glitch detector may be set based on the checked characteristic. A detailed embodiment of a design parameter will be described below with reference to FIG. 17.

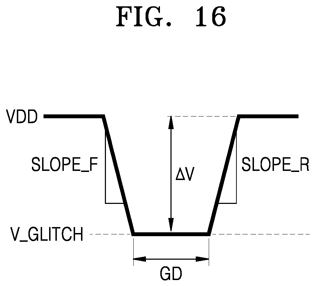

FIG. 16 is a diagram for describing a method of defining a glitch to be detected by a glitch detector through a characteristic of a protection-targeted chip checked in operation S110 of FIG. 15.

Referring to FIG. 16, a pattern of a glitch vulnerable in a protection-targeted chip may be obtained in operation S110 of FIG. 15. A pattern of a glitch may be defined by at least one of a first slope SLOPE_F by which a voltage is dropped from a source voltage level VDD to a glitch voltage level V_GLITCH less than the source voltage level VDD, a second slope SLOPE_R by which a voltage is recovered from the glitch voltage level V_GLITCH to the source voltage level VDD, a difference ΔV between the source voltage level VDD and the glitch voltage level V_GLITCH, and a period GD where the glitch voltage level V_GLITCH is maintained.

A pattern of a glitch causing an abnormal operation of a protection-targeted chip may be defined through a voltage glitch attach test on a protection-targeted chip, and a glitch detector may be designed to effectively detect a glitch of a defined pattern.

FIG. 17 is a diagram for describing a design parameter of FIG. 15.

Referring to a table TB of FIG. 17, a design parameter for a glitch detector may include an RC parameter (or a time constant parameter), a replica logic cell type parameter, and number of replica logic cells parameter.

In an embodiment, the RC parameter may be a parameter for determining a time constant of a low pass filter (122 of FIG. 2), the replica logic cell type parameter may be a parameter for determining the type of replica logic cell of a replica logic cell circuit (110 of FIG. 1), and the number of replica logic cells parameter may be a parameter for determining the number of replica logic cells of the replica logic cell circuit (110 of FIG. 1).

In an embodiment, the RC parameter may be determined based on a glitch pattern defined as in FIG. 15, and the type of replica logic cell and the number of replica logic cells may be determined based on logic cells which are vulnerable to a glitch attack of a protection-targeted chip.

Hereinabove, embodiments have been described in the drawings and the specification. Embodiments have been described by using the terms described herein, but this has been merely used for describing the inventive concept and has not been used for limiting a meaning or limiting the scope of the inventive concept defined in the following claims. Therefore, it may be understood by those of ordinary skill in the art that various modifications and other equivalent embodiments may be implemented from the inventive concept. Accordingly, the scope of the inventive concept may be defined based on the scope of the following claims.

While the inventive concept has been particularly shown and described with reference to embodiments thereof, it will be understood that various changes in form and details may be made therein without departing from the scope of the present invention as set forth in the following claims.

## Claims

1. A glitch detector (100) for detecting a glitch attack on a protection-targeted chip (13), the glitch detector (100) comprising:
a replica logic cell circuit (110) including a first replica logic cell (111) replicated from one of a plurality of logic cells (13_1) included in the protection-targeted chip (13);
a voltage isolation circuit (120) configured to generate an auxiliary voltage (V_AUX) decoupled from a variation of a first voltage (V_D1) supplied to the protection-targeted chip (13); and
a detection circuit (130) configured to generate, based on a first output signal (OUT_S) from the first replica logic cell (111), a first detection signal (DET_S) indicating whether a glitch on the first voltage (V_D1) has been detected,
wherein the first replica logic cell (111) is configured to receive the auxiliary voltage (V_AUX) from the voltage isolation circuit (120), receive the first voltage (V_D1) as an input, and output the first output signal (OUT_S).

2. The glitch detector of claim 1, wherein the first replica logic cell (111) comprises one of a NOT gate cell, a NAND gate cell, a NOR gate cell, or an XOR gate cell.

3. The glitch detector of claim 1 or 2, wherein the first replica logic cell (111) is further configured to output the first output signal (OUT_S) of which a level is changed, based on the variation of the first voltage (V_D1) being greater than or equal to a threshold.

4. The glitch detector of claim 3, wherein the threshold corresponds to a threshold voltage of a transistor (PT21, NT21) included in the first replica logic cell (211).

5. The glitch detector of any preceding claim, wherein the voltage isolation circuit (120) comprises:
a fast charging circuit (121) configured to generate the auxiliary voltage (V_AUX) by forming a unidirectional charging path from a first node (ND1) supplied with the first voltage (V_D1) to a second node (ND2); and
a low pass filter (122) connected between the first node (ND1) and the second node (ND2) in parallel with the fast charging circuit (121).

6. The glitch detector of claim 5, wherein the fast charging circuit (221) comprises a diode (D21) configured to form the unidirectional charging path, and
wherein the low pass filter (222) comprises a resistor (R21) connected between the first node (ND21) and the second node (ND22) and a capacitor (C21) connected between the second node (ND22) and a ground.

7. The glitch detector of any preceding claim , wherein the detection circuit (130) is further configured to receive the auxiliary voltage (V_AUX) from the voltage isolation circuit (120).

8. The glitch detector of any preceding claim, wherein the detection circuit (230) comprises a flip-flop (FF21) configured to receive the auxiliary voltage (V_AUX) through a data terminal thereof,
output the first detection signal (DET_S1) through an output terminal (Q) thereof, and receive the first output signal through a clock terminal (CLK) thereof.

9. The glitch detector of claim 8, wherein the flip-flop (FF21) is further configured to transition the first detection signal (DET_S1) from a low level to a high level corresponding to a level of the auxiliary voltage (V_AUX), based on a level transition of the first output signal (OUT_S1).

10. The glitch detector of any preceding claim, wherein the replica logic cell circuit (110) further includes a second replica logic cell (211) replicated from one of the plurality of logic cells, and
wherein the second replica logic cell (211) is configured to receive the auxiliary voltage (V_AUX) from the voltage isolation circuit (120), receive the first voltage (V_D1) as an input, and output a second output signal (OUT_S2).

11. The glitch detector of claim 10, wherein a type of the first replica logic cell (211) differs from a type of the second replica logic cell (212).

12. The glitch detector of claim 10, wherein the type of the first replica logic cell (211) is the same as the type of the second replica logic cell (212).

13. The glitch detector of claim 10, 11 or 12, wherein the detection circuit (230) is configured to generate the first detection signal (DET_S) further based on the second output signal (OUT_S2).

14. The glitch detector of any preceding claim, wherein the detection circuit (230) is further configured to receive a second voltage (V_D2), and
wherein the detection circuit (230) comprises a level adjustment circuit (370) configured to adjust the first output signal to have a level corresponding to a domain of the second voltage (V_D2) at a level corresponding to a domain of the auxiliary voltage (V_AUX) and output the adjusted first output signal to the detection circuit (230).

15. The glitch detector of any preceding claim, wherein the first replica logic cell (211) is configured to correspond to a representative logic cell (13_1) among the plurality of logic cells, the representative logic cell (13_1) having an association of a threshold or more with a characteristic of the protection-targeted chip (13).
